Europäisches Patentamt

European Patent Office

Office européen des brevets

(11) Publication number: **0 315 714 B1**

(12) **EUROPEAN PATENT SPECIFICATION**

(45) Date of publication of patent specification: **18.09.91**　(51) Int. Cl.⁵: **B64C 23/08**

(21) Application number: **87308981.7**

(22) Date of filing: **12.10.87**

(54) **Using of enginehouse of airplane with running surface for creation of effect of Magnus for VTOL.**

(43) Date of publication of application:
**17.05.89 Bulletin  89/20**

(45) Publication of the grant of the patent:
**18.09.91 Bulletin  91/38**

(84) Designated Contracting States:
**AT CH DE FR GB LI NL SE**

(56) References cited:
**GB-A- 439 963**
**GB-A- 885 663**
**US-A- 3 630 470**

(73) Proprietor: **Denev, Martin Ivanov**
**Postfach 5**
**A-2680 Semmering(AT)**

(72) Inventor: **Denev, Martin Ivanov**
**Postfach 5**
**A-2680 Semmering(AT)**

Rank Xerox (UK) Business Services

## Description

Using of enginehouse of airplane with running surface for creation of effect of Magnus for VTOL.

The invention relates to the use of running surfaces for creation of Magnus effect for VTOL.

There exists problem to create common propeller airplanes as VTOLs (vertical taking off and landing) planes. GB-A-885 663 discloses a propeller airplane which uses running surfaces adapted to utilise the Magnus effect in producing lifting forces. These running surfaces need however a heavy and complicated power transmission.
With aim to solve this problem, the invention defined by the features of claim 1 is provided.

With aim to better explain the idea of the invention an example is described:
The enginehouse of airplane which has profile of airplanewing is covered with band which can run against the airstream and to create liftingpower in accordance with the Effect of Magnus, when the stream of the propeller and the stream of the air meet the motorhouse, for VTOL of the airplane.

## Claims

1. Using of a propeller airplane's engine house covered with running surface for creating of liftingpower in accordance with the Effect of Magnus for VTOL, when the running surface as band is running in the airflow created by the propeller and the stream of the air.

## Revendications

1. Utilisation d'un carter de moteur pour avion avec hélice couvert de surface mobile pour créer de la force élévatrice conformément à l'effet Magnus pour VTOL quand la surface mobil sous forme d'un ruban tourne dans l'appel d'air creé par l'helice et le courant d'air.

## Patentansprüche

1. Verwendung eines mit rotierender Fläche versehenen Triebwerkgehäuses eines Propellerflugzeuges zur Erzeugung von Aufstiegkraft in Übereinstimmung mit dem Magnuseffekt für VTOL, wobei die rotierende Fläche als Band im vom Propeller und Luftzug erzeugten Luftstrom läuft.